# EUROPEAN PATENT APPLICATION

(11) **EP 4 588 554 A1**
(43) Date of publication of application: **23.07.2025**
(21) Application number: 23865436.2
(22) Date of filing: 08.09.2023
(51) Int. Cl.: B01D 63/10, B01D 63/00

(54) **SPIRAL MEMBRANE ELEMENT AND EDGE PART FOR SPIRAL MEMBRANE ELEMENT**

(30) Priority: 15.09.2022 JP 2022147337
(71) Applicant: NITTO DENKO CORPORATION, Ibaraki-shi Osaka 567-8680 (JP)
(72) Inventor: MIYAMOTO Atsuko, Ibaraki-shi, Osaka 567-8680 (JP); HATAHOKO Ibuki, Ibaraki-shi, Osaka 567-8680 (JP); SAKAKIBARA Yasuyuki, Ibaraki-shi, Osaka 567-8680 (JP)
(74) Representative: Hoffmann Eitle
(86) International application number: PCT/JP2023/032934
(87) International publication number: WO 2024/058082

(57) **Abstract**

The present invention provides a spiral membrane element suitable for improving adhesion between an end member and an exterior material. A spiral membrane element 100 includes an element body 10, an end member 20, and an exterior material 30. The end member 20 includes a body portion 21 having a first protrusion 22, and a skirt portion 25 located between the element body 10 and the exterior material 30, and satisfies at least one selected from the group consisting of the following requirements (1) to (3): (1) the first protrusion 22 has a cut-in portion 221 and a part of the exterior material 30 is placed into at least a part of the cut-in portion 221; (2) the skirt portion 25 has at least one of a hole 251 and a through hole 252, and a part of the exterior material 30 is placed into at least a part of at least one of a hole 251 and a through hole 252; and (3) the first protrusion 22 has a recess 222, and a part of the exterior material 30 is placed into at least a part of the recess 222.

## Description

### TECHNICAL FIELD

The present invention relates to a spiral membrane element and an end member for a spiral membrane element.

### BACKGROUND ART

As a method for separating acidic gas such as carbon dioxide from mixed gas containing the acidic gas, a membrane separation method has been developed. The membrane separation method allows efficient separation of acidic gas with reduced operation cost as compared to an absorption method in which acidic gas contained in mixed gas is separated by being absorbed to an absorbent.

For the membrane separation method, for example, a spiral membrane element is used. The spiral membrane element includes an element body including a central tube and a membrane leaf wound around the central tube, and an exterior material covering the outer circumferential surface of the element body. The membrane leaf has a separation membrane. The exterior material is made of a material that does not allow a fluid to pass therethrough.

During operation, raw material gas is supplied at a high pressure to an end surface of the element body of the spiral membrane element. Thus, due to an axial-direction pressure applied from the raw material gas, a so-called telescoping phenomenon in which a membrane leaf wound body protrudes in a nested shape from the element body can occur.

In order to suppress the telescoping phenomenon, a configuration in which an end member is attached to one or both ends in the axial direction of the spiral membrane element is known (for example, Patent Literature 1). The end member is also called a telescoping prevention member, an anti-telescoping member, and the like.

As the end member, an end member having an annular skirt portion located between the exterior material and the outer circumferential surface of the element body has been proposed (see, for example, FIG. 2 in Patent Literature 1). In the spiral membrane element using this end member, the skirt portion is adhered to a part of the exterior material, whereby the element body and the end member are fixed.

### CITATION LIST

### Patent Literature

Patent Literature 1: JP 2000-354742 A

### SUMMARY OF INVENTION

### Technical Problem

In general, the spiral membrane element is used in a state of being stored in a pressure-proof container. The spiral membrane element is configured to be attachable/detachable to/from the pressure-proof container. In the spiral membrane element using the end member having the skirt portion, when the spiral membrane element is detached from the pressure-proof container, the exterior material might be broken or torn at an adhesion part between the exterior material and the skirt portion of the end member, so that the exterior material is cracked. There is room for improvement in adhesion between the end member and the exterior material.

Accordingly, an object of the present invention is to provide a spiral membrane element including an end member suitable for improving adhesion between the end member and an exterior material, and such an end member for a spiral membrane element.

### Solution to Problem

The present invention provides a spiral membrane element including:
an element body including a central tube, and a membrane leaf having a separation membrane and wound around the central tube;
an end member provided at one or both ends in an axial direction of the element body; and
an exterior material covering at least an outer circumferential surface of the element body, wherein
the end member includes a body portion of which a cross-section perpendicular to the axial direction has a circular outline, and an annular skirt portion,
the body portion has a first protrusion formed in a circumferential direction,
the skirt portion extends toward the element body side from the first protrusion and is located between the element body and the exterior material, and
the end member satisfies at least one selected from the group consisting of the following requirements (1) to (3):
   (1) the first protrusion has a cut-in portion formed in an edge portion thereof on the skirt portion side, and a part of the exterior material is placed into at least a part of the cut-in portion;
   (2) the skirt portion has at least one of a hole and a through hole formed in an outer circumferential surface thereof, and a part of the exterior material is placed into at least a part of at least one of the hole and the through hole; and
   (3) the first protrusion has a recess formed in a direction tilted relative to the axial direction in an end surface thereof on the skirt portion side, and a part of the exterior material is placed into at least a part of the recess.

In another aspect, the present invention provides an end member for a spiral membrane element, to be used by being provided at one or both ends in an axial direction of the spiral membrane element, wherein
the spiral membrane element includes
   an element body including a central tube, and a membrane leaf having a separation membrane and wound around the central tube, and
   an exterior material covering at least an outer circumferential surface of the element body,
the end member includes a body portion of which a cross-section perpendicular to the axial direction has a circular outline, and an annular skirt portion,
the body portion has a first protrusion formed in a circumferential direction,
the skirt portion extends toward the element body side from the first protrusion and, in usage, is located between the element body and the exterior material, and
the end member satisfies at least one selected from the group consisting of the following requirements (i) to (iii):
   (i) the first protrusion has a cut-in portion formed in an edge portion thereof on the skirt portion side;
   (ii) the skirt portion has at least one of a hole and a through hole formed in an outer circumferential surface thereof; and
   (iii) the first protrusion has a recess formed in a direction tilted relative to the axial direction in an end surface thereof on the skirt portion side.

### Advantageous Effects of Invention

The present invention makes it possible to provide a spiral membrane element including an end member suitable for improving adhesion between the end member and an exterior material, and such an end member for a spiral membrane element.

### BRIEF DESCRIPTION OF THE DRAWINGS

FIG. 1 is a schematic sectional view showing an example of a spiral membrane element of the present embodiment.
FIG. 2 is a developed perspective view schematically showing the spiral membrane element of the present embodiment.
FIG. 3 is a schematic sectional view showing an example of a separation membrane included in the spiral membrane element of the present embodiment.
FIG. 4A is a perspective view showing an example of an end member satisfying a requirement (1).
FIG. 4B is a schematic side view of the end member shown in FIG. 4A.
FIG. 4C is a partial sectional view of the end member along line IVC-IVC.
FIG. 4D is a partial sectional view showing the end member together with an exterior material along line IVC-IVC.
FIG. 4E is schematic side views showing other examples of a first protrusion of the end member satisfying the requirement (1).
FIG. 4F is partial side views and partial sectional views showing examples of an inner surface of a cut-in portion provided to the first protrusion of the end member satisfying the requirement (1).
FIG. 5A is a perspective view showing an example of the end member satisfying a requirement (2).
FIG. 5B is a schematic side view of the end member shown in FIG. 5A.
FIG. 5C is partial sectional views of the end member along line VC-VC.
FIG. 5D is a schematic side view showing another example of a skirt portion of the end member satisfying the requirement (2).
FIG. 6A is a perspective view showing an example of the end member satisfying a requirement (3).
FIG. 6B is a schematic side view of the end member shown in FIG. 6A.
FIG. 6C is partial sectional views of the end member along line VIC-VIC.
FIG. 6D is a partial sectional view illustrating a tilt angle of a recess relative to an axial direction X.
FIG. 6E is a schematic side view showing another example of the first protrusion of the end member satisfying the requirement (3).
FIG. 7A illustrates a manufacturing method for the spiral membrane element of the present embodiment.
FIG. 7B illustrates the manufacturing method for the spiral membrane element of the present embodiment.
FIG. 7C illustrates the manufacturing method for the spiral membrane element of the present embodiment.

### DESCRIPTION OF EMBODIMENTS

A spiral membrane element according to a first aspect of the present invention includes:
an element body including a central tube, and a membrane leaf having a separation membrane and wound around the central tube;
an end member provided at one or both ends in an axial direction of the element body; and
an exterior material covering at least an outer circumferential surface of the element body, wherein
the end member includes a body portion of which a cross-section perpendicular to the axial direction has a circular outline, and an annular skirt portion,
the body portion has a first protrusion formed in a circumferential direction,
the skirt portion extends toward the element body side from the first protrusion and is located between the element body and the exterior material, and
the end member satisfies at least one selected from the group consisting of the following requirements (1) to (3):
   (1) the first protrusion has a cut-in portion formed in an edge portion thereof on the skirt portion side, and a part of the exterior material is placed into at least a part of the cut-in portion;
   (2) the skirt portion has at least one of a hole and a through hole formed in an outer circumferential surface thereof, and a part of the exterior material is placed into at least a part of at least one of the hole and the through hole; and
   (3) the first protrusion has a recess formed in a direction tilted relative to the axial direction in an end surface thereof on the skirt portion side, and a part of the exterior material is placed into at least a part of the recess.

According to a second aspect of the present invention, for example, in the spiral membrane element according to the first aspect, in the requirement (1), the first protrusion includes a plurality of the cut-in portions formed in the edge portion along the circumferential direction.

According to a third aspect of the present invention, for example, in the spiral membrane element according to the first or second aspect, in the requirement (1), the cut-in portion is formed so as to open in the axial direction and a radial direction in the edge portion.

According to a fourth aspect of the present invention, for example, in the spiral membrane element according to any one of the first to third aspects, in the requirement (1), when the end member is seen in a side view, the cut-in portion has one shape selected from a V shape, a rectangular shape, a trapezoidal shape, a semicircular shape, an M shape, and a combination thereof.

According to a fifth aspect of the present invention, for example, in the spiral membrane element according to any one of the first to fourth aspects, in the requirement (1), the cut-in portion has a recess-projection on an inner surface thereof.

According to a sixth aspect of the present invention, for example, in the spiral membrane element according to any one of the first to fifth aspects, in the requirement (2), the skirt portion includes at least either a plurality of the holes or a plurality of the through holes formed in the outer circumferential surface along the circumferential direction.

According to a seventh aspect of the present invention, for example, in the spiral membrane element according to any one of the first to sixth aspects, in the requirement (2), the hole includes a groove extending continuously in the circumferential direction.

According to an eighth aspect of the present invention, for example, in the spiral membrane element according to any one of the first to seventh aspects, in the requirement (3), the first protrusion includes a plurality of the recesses formed in the end surface along the circumferential direction.

According to a ninth aspect of the present invention, for example, in the spiral membrane element according to any one of the first to eighth aspects, in the requirement (3), the recess is formed so as to be tilted toward the element body side relative to the axial direction.

According to a tenth aspect of the present invention, for example, in the spiral membrane element according to any one of the first to ninth aspects, in the requirement (3), the recess includes a groove extending continuously in the circumferential direction.

According to an eleventh aspect of the present invention, for example, in the spiral membrane element according to any one of the first to tenth aspects, the end member contains a polyamide resin as a main component.

According to a twelfth aspect of the present invention, for example, in the spiral membrane element according to any one of the first to eleventh aspects, the exterior material includes glass fiber and a resin, and
the part of the exterior material is formed by only the resin.

According to a thirteenth aspect of the present invention, for example, in the spiral membrane element according to any one of the first to twelfth aspects, the body portion of the end member further has a second protrusion, and a seal groove which is located between the first protrusion and the second protrusion and at which a seal member is to be provided, the second protrusion and the seal groove each being formed in the circumferential direction.

According to a fourteenth aspect of the present invention, for example, in the spiral membrane element according to any one of the first to thirteenth aspects, a feed fluid to be processed through the spiral membrane element is gas.

An end member for a spiral membrane element according to a fifteenth aspect of the present invention is an end member for a spiral membrane element, to be used by being provided at one or both ends in an axial direction of the spiral membrane element, wherein
the spiral membrane element includes
   an element body including a central tube, and a membrane leaf having a separation membrane and wound around the central tube, and
   an exterior material covering at least an outer circumferential surface of the element body,
the end member includes a body portion of which a cross-section perpendicular to the axial direction has a circular outline, and an annular skirt portion,
the body portion has a first protrusion formed in a circumferential direction,
the skirt portion extends toward the element body side from the first protrusion and, in usage, is located between the element body and the exterior material, and
the end member satisfies at least one selected from the group consisting of the following requirements (i) to (iii):
   (i) the first protrusion has a cut-in portion formed in an edge portion thereof on the skirt portion side;
   (ii) the skirt portion has at least one of a hole and a through hole formed in an outer circumferential surface thereof; and
   (iii) the first protrusion has a recess formed in a direction tilted relative to the axial direction in an end surface thereof on the skirt portion side.

Hereinafter, the details of the present invention will be described, but the following description is not intended to restrict the present invention to a specific embodiment.

### <Embodiment of Spiral Membrane Element>

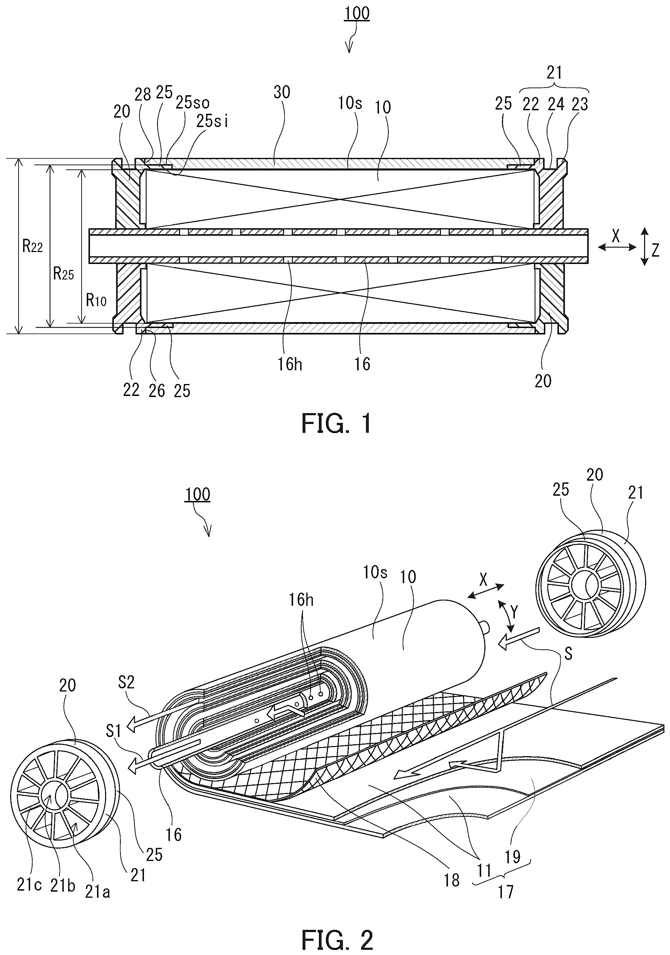

FIG. 1 is a schematic sectional view showing an example of a spiral membrane element 100 (hereinafter, referred to as "separation membrane element 100") of the present embodiment. FIG. 2 is a developed perspective view schematically showing the separation membrane element 100. The separation membrane element 100 includes an element body 10, an end member 20, and an exterior material 30. In FIG. 2, the exterior material 30 is not shown. The element body 10 includes a central tube 16, and a membrane leaf 17 having a separation membrane 11 and wound around the central tube 16. The exterior material 30 covers at least an outer circumferential surface 10s of the element body 10. The end member 20 is provided at one or both ends in an axial direction X of the element body 10. As used herein, the axial direction X refers to a direction parallel to a direction in which the central tube 16 of the element body 10 extends.

### [Element Body]

A feed fluid flow path and a permeation fluid flow path are formed inside the element body 10. A feed fluid S is supplied from one end surface of the element body 10 to the inside of the separation membrane element 100, and flows through the feed fluid flow path parallel to a longitudinal direction of the central tube 16. In the separation membrane element 100, the feed fluid S is separated, so that a permeated fluid S1 and a non-permeated fluid S2 are produced. The permeated fluid S1 is introduced through the central tube 16 to the outside. The non-permeated fluid S2 is discharged from the other end surface of the element body 10 to the outside of the separation membrane element 100.

The feed fluid to be processed through the separation membrane element 100 may be gas or liquid. As an example, the feed fluid is mixed gas containing acidic gas, and in particular, mixed gas containing carbon dioxide and nitrogen.

The membrane leaf 17 includes the separation membrane 11 and a permeation-side flow path material 19. The element body 10 further includes a feed-side flow path material 18. The feed-side flow path material 18 is laminated on the membrane leaf 17.

As the feed-side flow path material 18 and the permeation-side flow path material 19, a resin net, woven fabric, or knitted fabric made of polyethylene, polypropylene, polyethylene terephthalate (PET), polyphenylene sulfide (PPS), or an ethylene-chlorotrifluoroethylene copolymer (ECTFE), can be used, for example.

The central tube 16 has a cylindrical shape. The central tube 16 has, in a surface thereof, through holes 16h through which the permeated fluid S1 flows into the central tube 16. The number of the through holes 16h is not particularly limited, and may be one, or two or more. Examples of the material of the central tube 16 include: a resin such as an acrylonitrile-butadiene-styrene copolymer resin (ABS resin), a polyphenylene ether resin (PPE resin), or a polysulfone resin (PSF resin); and a metal such as stainless steel or titanium. The inner diameter of the central tube 16 is in a range of 20 to 100 mm, for example.

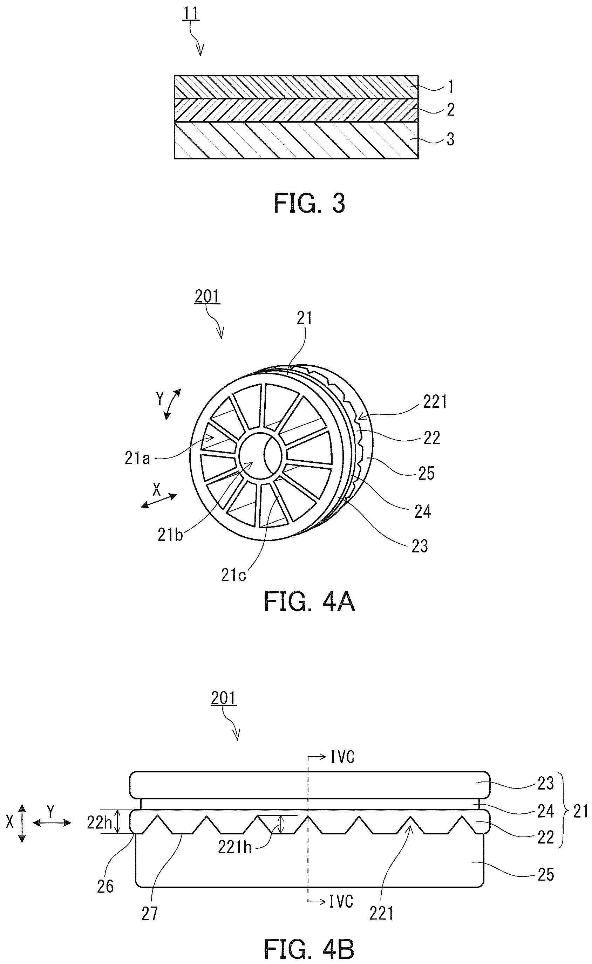

The configuration of the separation membrane 11 is not particularly limited. FIG. 3 is a schematic sectional view showing an example of the separation membrane 11 included in the separation membrane element 100. As shown in FIG. 3, the separation membrane 11 may include a separation functional layer 1, a porous support member 3 supporting the separation functional layer 1, and an intermediate layer 2 provided between the separation functional layer 1 and the porous support member 3. The intermediate layer 2 is in direct contact with the separation functional layer 1 and the porous support member 3, for example.

### (Separation Functional Layer)

The separation functional layer 1 is a layer that allows acidic gas contained in mixed gas to preferentially permeate therethrough, for example. The separation functional layer 1 preferably includes a resin. Examples of the resin included in the separation functional layer 1 include a polyether block amide resin, a polyamide resin, a polyether resin, a polyimide resin, a polyether imide resin, a cellulose acetate resin, a silicone resin, and a fluorine resin. The separation functional layer 1 preferably includes a polyimide resin or a cellulose acetate resin, and more preferably includes a polyimide resin. The separation functional layer 1 is preferably composed substantially of a resin. As used herein, the wording "composed substantially of" means that another component that alters essential characteristics of a mentioned material is excluded, and means that 95 wt% or more, or further, 99 wt% or more is composed of the material, for example.

The thickness of the separation functional layer 1 is, for example, 50 µm or less, preferably 25 µm or less, and more preferably 15 µm or less. The thickness of the separation functional layer 1 may be 0.05 µm or more, or may be 0.1 µm or more.

### (Intermediate Layer)

The intermediate layer 2 includes a resin, for example, and may further include nanoparticles dispersed in the resin (matrix). The nanoparticles may be separated from each other or partially aggregate in the matrix. The material of the matrix is not particularly limited, and examples thereof include: a silicone resin such as polydimethylsiloxane; a fluorine resin such as polytetrafluoroethylene; an epoxy resin such as polyethylene oxide; a polyimide resin; a polysulfone resin; a polyacetylene resin such as polytrimethylsilylpropyne or polydiphenylacetylene; and a polyolefin resin such as polymethylpentene. The matrix preferably includes a silicone resin.

The nanoparticles may include an inorganic material or an organic material. Examples of the inorganic material included in the nanoparticles include silica, titania, and alumina. The nanoparticles preferably include silica.

The thickness of the intermediate layer 2 is not particularly limited and is, for example, less than 50 µm, preferably 40 µm or less, and more preferably 30 µm or less. The lower limit of the thickness of the intermediate layer 2 is not particularly limited and is, for example, 1 µm. The intermediate layer 2 is a layer having a thickness of less than 50 µm, for example.

### (Porous Support Member)

The porous support member 3 supports the separation functional layer 1 via the intermediate layer 2. Examples of the porous support member 3 include: a nonwoven fabric; porous polytetrafluoroethylene; aromatic polyamide fiber; a porous metal; a sintered metal; porous ceramic; porous polyester; porous nylon; activated carbon fiber; latex; silicone; silicone rubber; a permeable (porous) polymer including at least one selected from the group consisting of polyvinyl fluoride, polyvinylidene fluoride, polyurethane, polypropylene, polyethylene, polystyrene, polycarbonate, polysulfone, polyether ether ketone, polyacrylonitrile, polyimide, and polyphenylene oxide; a metallic foam having an open cell or a closed cell; a polymer foam having an open cell or a closed cell; silica; a porous glass; and a mesh screen. The porous support member 3 may be a combination of two or more of these materials.

The porous support member 3 has an average pore diameter of 0.01 to 0.4 µm, for example. The thickness of the porous support member 3 is not particularly limited and is, for example, 10 µm or more, preferably 20 µm or more, and more preferably 50 µm or more. The thickness of the porous support member 3 is, for example, 300 µm or less, preferably 200 µm or less, and more preferably 150 µm or less.

The configuration of the separation membrane 11 is not limited to the example shown in FIG. 3. For example, the separation membrane 11 may be composed of the separation functional layer 1, and the porous support member 3 provided on one surface side of the separation functional layer 1 and supporting the separation functional layer 1. As another example, the separation membrane 11 may be composed of the separation functional layer 1, a protection layer provided on one surface side of the separation functional layer 1 and protecting the separation functional layer 1, and the porous support member 3 provided on the other surface side of the separation functional layer 1 and supporting the separation functional layer 1. As the protection layer, the one including the material described for the intermediate layer 2 can be used.

### [Exterior Material]

The exterior material 30 is wound along the outer circumferential surface 10s of the element body 10, thereby covering the outer circumferential surface 10s of the element body 10. The exterior material 30 is made of a material that does not allow a liquid to pass therethrough. The exterior material 30 includes glass fiber and a resin, for example. The resin is typically an epoxy resin. The exterior material 30 may be made of FRP (fiber reinforced plastic). The exterior material 30 may be formed by winding a glass roving (bundle of glass fiber) impregnated with an epoxy resin along the outer circumferential surface 10s of the element body 10 and then curing the resin.

### [End Member]

The end member 20 is a member for suppressing the telescoping phenomenon during operation, and is attached to one or both ends in the axial direction X of the element body 10. Typically, the end member 20 is attached to both ends in the axial direction X of the element body 10. In the example in FIG. 1 and FIG. 2, two end members 20 are provided so as to oppose each other at both ends in the axial direction X of the element body 10.

As shown in FIG. 1 and FIG. 2, each end member 20 includes a body portion 21 of which the cross-section perpendicular to the axial direction X has a circular outline, and an annular skirt portion 25.

As shown in FIG. 1, the body portion 21 has a first protrusion 22, a second protrusion 23, and a seal groove 24 which is located between the first protrusion 22 and the second protrusion 23 and at which a seal member (not shown) is to be provided, and the first protrusion 22, the second protrusion 23, and the seal groove 24 are each formed in the circumferential direction Y. The first protrusion 22 and the second protrusion 23 protrude in the circumferential direction Y. As used herein, the circumferential direction Y refers to a direction to revolve around the axial direction X. The element body 10 with a seal member such as an O ring attached in the seal groove 24 is provided in a pressure-proof container, whereby the surface of the seal member contacts with the inner circumferential surface of the pressure-proof container.

The skirt portion 25 extends toward the element body 10 side from the first protrusion 22. Specifically, the skirt portion 25 extends toward the element body 10 side from an end surface 28 on the skirt portion 25 side of the first protrusion 22. The end surface 28 is an end surface located on the skirt portion 25 side, of a pair of end surfaces in the circumferential direction Y that the first protrusion 22 has. As shown in FIG. 1, the skirt portion 25 is located between the element body 10 and the exterior material 30. The separation membrane element 100 is configured such that the skirt portion 25 of the end member 20 is located between the element body 10 and the exterior material 30, and therefore the length in the axial direction X of the element body 10 relative to the length in the axial direction X of the separation membrane element 100 can be made as large as possible. Thus, the membrane area can be made as large as possible. In other words, in the separation membrane element 100, the membrane area need not be reduced due to the configuration of the end member 20.

As shown in FIG. 1, a diameter R₂₂ of the first protrusion 22 is larger than a diameter R₂₅ of the skirt portion 25. Therefore, the end member 20 has a step 26 in a radial direction Z, between the first protrusion 22 and the skirt portion 25. As used herein, the radial direction Z refers to a direction perpendicular to the axial direction X. The exterior material 30 covers the skirt portion 25 so as to bury the step 26, whereby the end member 20 and the element body 10 are fixed. In the example shown in FIG. 1, the diameter of the second protrusion 23 is equal to the diameter R₂₂ of the first protrusion 22, but the diameter of the second protrusion 23 may be smaller than the diameter R₂₂ of the first protrusion 22 as long as the seal groove 24 can be ensured between the first protrusion 22 and the second protrusion 23.

The diameter R₂₂ of the first protrusion 22 is larger than an outer diameter R₁₀ of the element body 10. That is, in the separation membrane element 100, R₂₂ > R₂₅ > R₁₀ is satisfied.

The inner diameter of the skirt portion 25 is approximately the same as the outer diameter R₁₀ of the element body 10. Therefore, when the end member 20 is provided at the end in the axial direction X of the element body 10, an inner circumferential surface 25si of the skirt portion 25 can contact with the outer circumferential surface 10s of the element body 10. In this state, the exterior material 30 is attached across an outer circumferential surface 25so of the skirt portion 25 and the outer circumferential surface 10s of the element body 10, whereby the element body 10 is covered by the end member 20 and the exterior material 30.

As shown in FIG. 2, the body portion 21 has an opening 21a that allows a fluid to pass therethrough and an annular portion 21b into which the central tube 16 is inserted, and the opening 21a and the annular portion 21b are each formed in the axial direction X. As shown in FIG. 2, the opening 21a may be divided by a plurality of connection portions 21c provided in a spoke shape.

The end member 20 may contain a polyamide resin, a phenolic resin, a fluorine resin, or austenitic stainless steel, as a main component. The "main component" refers to a component most contained in the end member 20 on a weight basis. The above materials have high resistance to heavy hydrocarbons such as benzene, toluene, ethylbenzene, xylene (these are BTEX components), and unsaturated hydrocarbons. Therefore, the end member 20 containing such a material as a main component is particularly suitable for separation of gas such as acidic gas. The end member 20 may contain a polyamide resin as a main component. As the polyamide resin, a thermoplastic polyamide resin is preferable because the thermoplastic polyamide resin can be processed by injection molding. The polyamide resin is preferable also in terms of cost.

In the present embodiment, the end member 20 satisfies at least one selected from the group consisting of the following requirements (1) to (3):
(1) the first protrusion 22 has a cut-in portion 221 formed in an edge portion 27 thereof on the skirt portion 25 side, and a part 30a of the exterior material 30 is placed into at least a part of the cut-in portion 221;
(2) the skirt portion 25 has at least one of a hole 251 and a through hole 252 formed in the outer circumferential surface 25so thereof, and a part 30a of the exterior material 30 is placed into at least one of the hole 251 and the through hole 252; and
(3) the first protrusion 22 has a recess 222 formed in a direction tilted relative to the axial direction X at the end surface 28 thereof on the skirt portion 25 side, and a part 30a of the exterior material 30 is placed into at least a part of the recess 222.

Hereinafter, the requirements (1) to (3) will be described in more detail.

### <Requirement (1)>

FIG. 4A to FIG. 4F show the end member 20 satisfying the requirement (1). For convenience sake, the end member 20 satisfying the requirement (1) is referred to as an end member 201. FIG. 4A is a perspective view showing an example of the end member 201. FIG. 4B is a schematic side view of the end member 201. As shown in FIG. 4A and FIG. 4B, in the end member 201, the first protrusion 22 has the cut-in portion 221 formed in the edge portion 27 on the skirt portion 25 side.

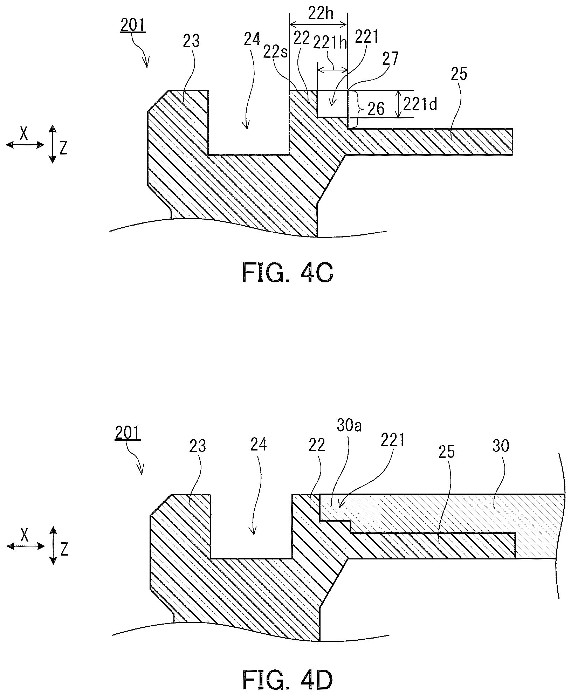

FIG. 4C is a partial sectional view of the end member 201 along line IVC-IVC. As shown in FIG. 4C, the cut-in portion 221 is a recess formed across the edge portion 27 of the first protrusion 22. The edge portion 27 is an edge portion located on the skirt portion 25 side, of a pair of edge portions in the circumferential direction Y that the first protrusion 22 has.

FIG. 4D is a partial sectional view showing the end member 201 together with the exterior material 30 along line IVC-IVC. As shown in FIG. 4D, in the separation membrane element 100 including the end member 201, the part 30a of the exterior material 30 is placed into at least a part of the cut-in portion 221. Since the cut-in portion 221 is present, the adhesion area between the end member 201 and the exterior material 30 increases, so that adhesion between the end member 201 and the exterior material 30 improves. Thus, the separation membrane element 100 including the end member 201 is suitable for improving adhesion between the end member 201 and the exterior material 30. With the separation membrane element 100 including the end member 201, it is possible to suppress occurrence of a crack between the end member 201 and the exterior material 30 when the separation membrane element 100 is detached from the pressure-proof container.

As shown in FIG. 4A and FIG. 4B, the first protrusion 22 may include a plurality of cut-in portions 221 formed in the edge portion 27 along the circumferential direction Y. In other words, a plurality of cut-in portions 221 may be formed along the circumferential direction Y in the edge portion 27 of the first protrusion 22. Since the plurality of cut-in portions 221 are present, the adhesion area between the end member 201 and the exterior material 30 further increases, so that adhesion between the end member 201 and the exterior material 30 further improves.

The plurality of cut-in portions 221 may or may not be arranged at equal intervals along the edge portion 27 of the first protrusion 22.

As shown in FIG. 4C, the cut-in portion 221 may be formed so as to open in the axial direction X and the radial direction Z in the edge portion 27. When the cut-in portion 221 is formed so as to open in the axial direction X and the radial direction Z in the edge portion 27, the part 30a of the exterior material 30 is readily placed into the cut-in portion 221, as shown in FIG. 4D. Thus, adhesion between the end member 20 and the exterior material 30 can be more improved.

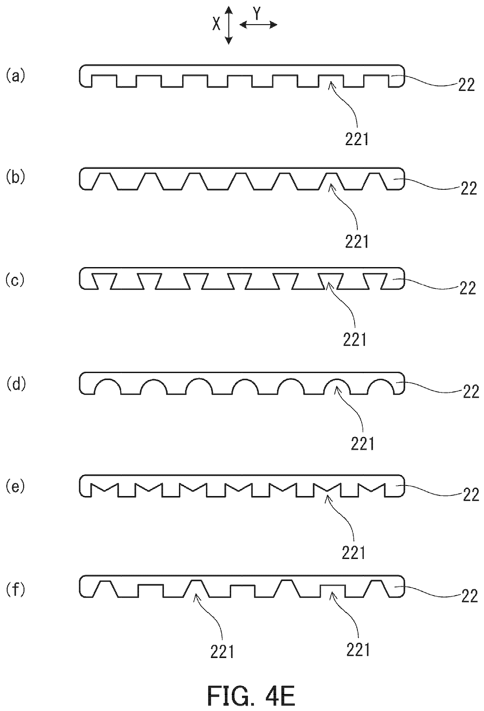

The shape of the cut-in portions 221 when the end member 201 is seen in a side view is not particularly limited. As shown in FIG. 4B, when the end member 201 is seen in a side view, the cut-in portions 221 may have a V shape. FIG. 4E is schematic side views showing other examples of the first protrusion 22 of the end member 201. In FIG. 4E, parts other than the first protrusion 22 are not shown. As shown in (a) to (f) of FIG. 4E, when the end member 201 is seen in a side view, the cut-in portions 221 may have one shape selected from a rectangular shape, a trapezoidal shape, a semicircular shape, an M shape, and a combination thereof, in addition to the V shape. In FIG. 4E, (a) shows an example in which the cut-in portions 221 have a rectangular shape, (b) shows an example in which the cut-in portions 221 have a trapezoidal shape, (c) shows an example in which the cut-in portions 221 have a reverse trapezoidal shape, (d) shows an example in which the cut-in portions 221 have a semicircular shape, (d) shows an example in which the cut-in portions 221 have a semicircular shape, (e) shows an example in which the cut-in portions 221 have an M shape, and (f) shows an example in which the cut-in portions 221 have a combination of a rectangular shape and a trapezoidal shape.

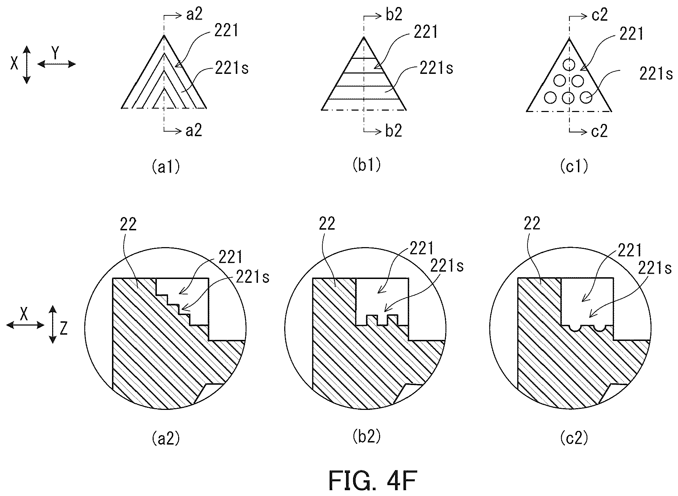

FIG. 4F is partial side views and partial sectional views showing an example of an inner surface 221s of the cut-in portion 221 that the first protrusion 22 of the end member 201 has. The upper stage in FIG. 4F shows examples (a1) to (c1) of partial side views of the cut-in portion 221. In (a1) to (c1), parts of the cut-in portion 221 are not shown. The lower stage in FIG. 4F shows partial sectional views (a2) to (c2) of the cut-in portion 221 corresponding to (a1) to (c1), respectively. For example, (a2) is a partial sectional view along line a2-a2. As shown in FIG. 4F, the cut-in portion 221 may have a recess-projection on the inner surface 221s. In FIG. 4F, (a1) and (a2) show an example in which the inner surface 221s of the cut-in portion 221 is recessed in a step shape toward the radial direction Z, (b1) and (b2) show examples in which the inner surface 221s of the cut-in portion 221 has ridges in a transverse stripe shape, and (c1) and (c2) show an example in which the inner surface 221s of the cut-in portion 221 has a circular recess. When the inner surface 221s of the cut-in portion 221 has a recess-projection, the adhesion area between the end member 201 and the exterior material 30 further increases. Thus, adhesion between the end member 20 and the exterior material 30 can be further improved.

A height 221h of the cut-in portion 221 in the end member 201 is not particularly limited. As shown in FIG. 4B and FIG. 4C, the height 221h of the cut-in portion 221 refers to a distance from the edge portion 27 to the topmost point of the cut-in portion 221 when the end member 201 is seen in a side view. The height 221h of the cut-in portion 221 can be set as appropriate in accordance with a height 22h of the first protrusion 22, a length of the outer circumference of the first protrusion 22, and the like.

A depth 221d of the cut-in portion 221 in the end member 201 is not particularly limited. As shown in FIG. 4C, the depth 221d of the cut-in portion 221 refers to a distance from a surface 22s of the first protrusion 22 to the deepest point of the cut-in portion 221 when the end member 201 is seen in a sectional view. The depth 221d of the cut-in portion 221 can be set as appropriate in accordance with the height 22h of the first protrusion 22, the length of the outer circumference of the first protrusion 22, and the like.

### <Requirement (2)>

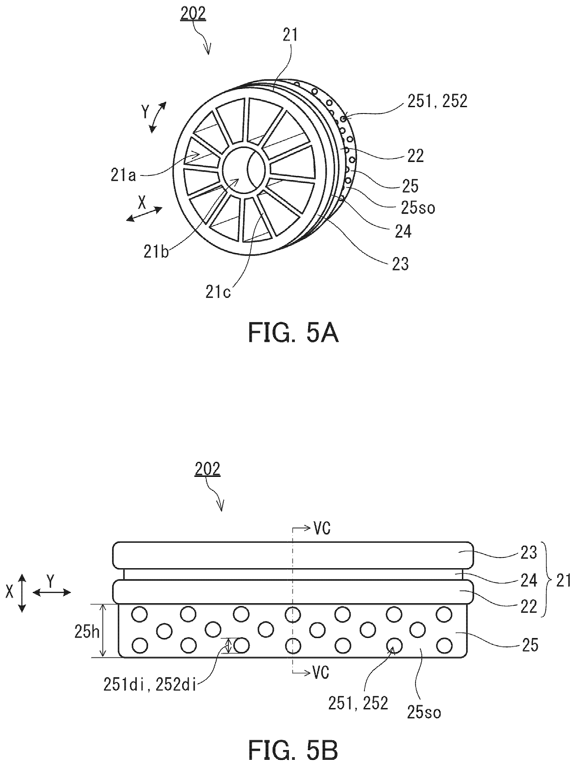

FIG. 5A to FIG. 5D show the end member 20 satisfying the requirement (2). For convenience sake, the end member 20 satisfying the requirement (2) is referred to as an end member 202. FIG. 5A is a perspective view showing an example of the end member 202. FIG. 5B is a schematic side view of the end member 202. As shown in FIG. 5A and FIG. 5B, in the end member 202, the skirt portion 25 has at least one of the hole 251 and the through hole 252 formed in the outer circumferential surface 25so.

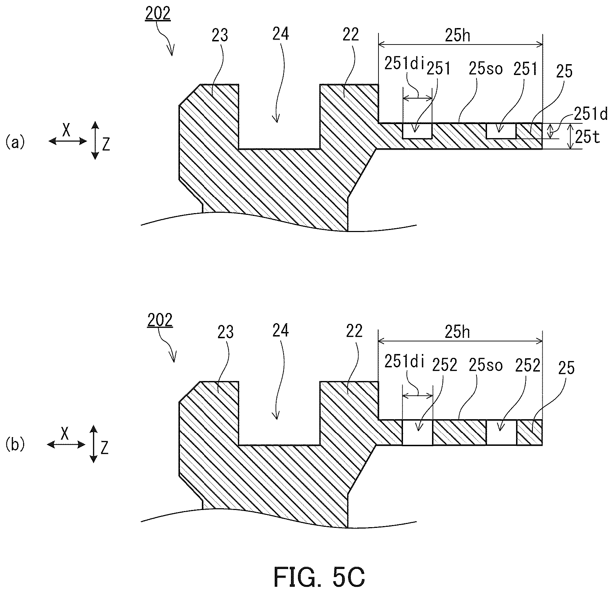

FIG. 5C is partial sectional views of the end member 202 along line VC-VC. In FIG. 5C, (a) shows an example in which the skirt portion 25 has the hole 251 formed in the outer circumferential surface 25so. The hole 251 is a bottomed hole formed in the outer circumferential surface 25so of the skirt portion 25. In FIG. 5C, (b) shows an example in which the skirt portion 25 has the through hole 252 formed in the outer circumferential surface 25so. The through hole 252 is a hole formed so as to penetrate the outer circumferential surface 25so of the skirt portion 25.

Although not shown, in the separation membrane element 100 including the end member 202, the part 30a of the exterior material 30 is placed into at least a part of at least one of the hole 251 and the through hole 252. Since at least one of the hole 251 and the through hole 252 is present, the adhesion area between the end member 202 and the exterior material 30 increases, so that adhesion between the end member 202 and the exterior material 30 improves. Thus, the separation membrane element 100 including the end member 202 is suitable for improving adhesion between the end member 202 and the exterior material 30. With the separation membrane element 100 including the end member 202, it is possible to suppress occurrence of a crack between the end member 202 and the exterior material 30 when the separation membrane element 100 is detached from the pressure-proof container.

As shown in FIG. 5A and FIG. 5B, the skirt portion 25 may include at least either a plurality of holes 251 or a plurality of through holes 252 formed in the outer circumferential surface 25so along the circumferential direction Y. In other words, a plurality of holes 251 and/or a plurality of through holes 252 may be formed along the circumferential direction Y in the outer circumferential surface 25so of the skirt portion 25. In the outer circumferential surface 25so of the skirt portion 25, a plurality of holes 251 and a plurality of through holes 252 may be formed in a mixed manner. Since the plurality of holes 251 and/or the plurality of through holes 252 are present, the adhesion area between the end member 202 and the exterior material 30 further increases, so that adhesion between the end member 202 and the exterior material 30 further improves.

The plurality of holes 251 and/or the plurality of through holes 252 may or may not be arranged at equal intervals along the outer circumferential surface 25so of the skirt portion 25.

The shapes of the holes 251 and/or the through holes 252 when the end member 202 is seen in a side view are not particularly limited. As shown in FIG. 5B, when the end member 201 is seen in a side view, the holes 251 and/or the through holes 252 may have a circular shape. The holes 251 and/or the through holes 252 may have a rectangular shape, for example. The holes 251 and/or the through holes 252 may have a combination of different shapes.

A diameter 251di of the hole 251 and a diameter 252di of the through hole 252 in the end member 202 are not particularly limited. The diameter 251di of the hole 251 and the diameter 252di of the through hole 252 can be set as appropriate in accordance with a height 25h of the skirt portion 25, a length of the outer circumference of the skirt portion 25, and the like. In a case where the shape of the hole 251 and/or the through hole 252 when the end member 202 is seen in a side view is other than a circular shape, the diameter 251di of the hole 251 refers to the maximum width of the hole 251 in the axial direction X. The diameter 252di of the through hole 252 is the maximum width of the through hole 252 in the axial direction X.

A depth 251d of the hole 251 in the end member 202 is not particularly limited. As shown in (a) of FIG. 5C, the depth 251d of the hole 251 refers to a distance from the outer circumferential surface 25so of the skirt portion 25 to the deepest point of the hole 251 when the end member 202 is seen in a sectional view. The depth 251d of the hole 251 can be set as appropriate in accordance with a thickness 25t of the skirt portion 25, the length of the outer circumference of the skirt portion 25, and the like.

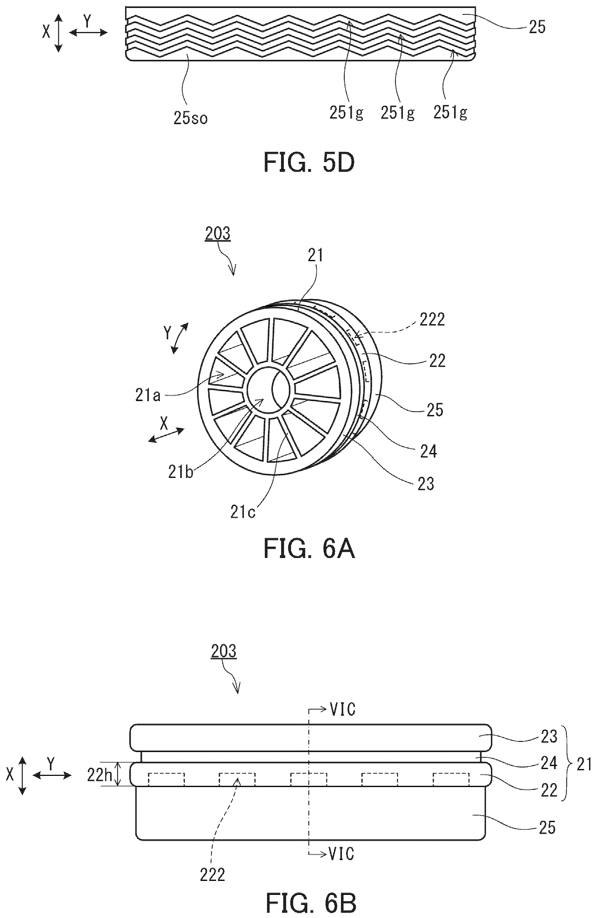

The hole 251 is a concept including a groove 251g extending continuously in the circumferential direction Y. FIG. 5D is a schematic side view showing another example of the skirt portion 25 of the end member 202. In FIG. 5D, parts other than the skirt portion 25 are not shown. As shown in FIG. 5D, the hole 251 may be the groove 251g extending continuously in the circumferential direction Y. A plurality of grooves 251g may be formed in the axial direction X in the skirt portion 25. The shape of the grooves 251g is not particularly limited. The grooves 251g may have a wavy shape as shown in the example in FIG. 5D, or may have a straight shape. Although not shown, the plurality of grooves 251g may be formed in the circumferential direction Y of the skirt portion 25.

### <Requirement (3)>

FIG. 6A to FIG. 6E show the end member 20 satisfying the requirement (3). For convenience sake, the end member 20 satisfying the requirement (3) is referred to as an end member 203. FIG. 6A is a perspective view showing an example of the end member 203. FIG. 6B is a schematic side view of the end member 203. As shown in FIG. 6A and FIG. 6B, in the end member 203, the first protrusion 22 has the recess 222 formed in a direction tilted relative to the axial direction X in the end surface 28 on the skirt portion 25 side.

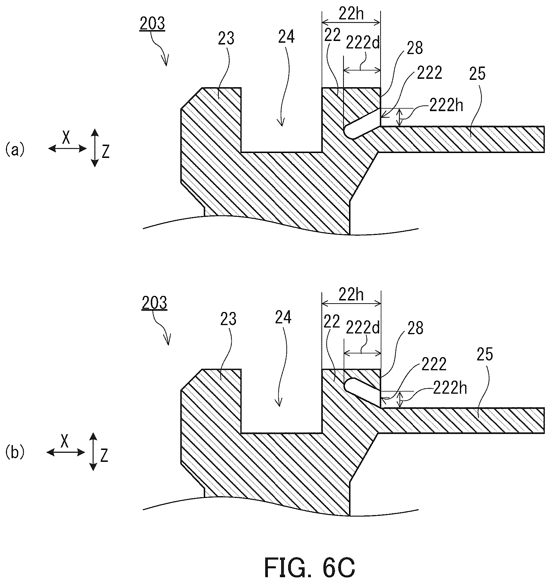

FIG. 6C is partial sectional views of the end member 203 along line VIC-VIC. As shown in FIG. 6C, the recess 222 is a recess formed in a direction tilted relative to the axial direction X so as to hollow out the end surface 28 of the first protrusion 22. As described above, the end surface 28 is an end surface located on the skirt portion 25 side, of a pair of end surfaces in the circumferential direction Y that the first protrusion 22 has. In FIG. 6C, (a) shows an example in which the recess 222 is formed so as to be tilted toward the element body 10 side relative to the axial direction X. In FIG. 6C, (b) shows an example in which the recess 222 is formed so as to be tilted toward a side opposite to the element body 10 relative to the axial direction X.

Although not shown, in the separation membrane element 100 including the end member 203, the part 30a of the exterior material 30 is placed into at least a part of the recess 222. Since the recess 222 is present, the adhesion area between the end member 203 and the exterior material 30 increases, so that adhesion between the end member 203 and the exterior material 30 improves. In addition, since the recess 222 is formed in a direction tilted relative to the axial direction X, the part 30a of the exterior material 30 placed into the recess 222 serves as a hook portion to the end member 203. Thus, the separation membrane element 100 including the end member 203 is suitable for improving adhesion between the end member 203 and the exterior material 30. With the separation membrane element 100 including the end member 203, it is possible to suppress occurrence of a crack between the end member 203 and the exterior material 30 when the separation membrane element 100 is detached from the pressure-proof container.

As shown in FIG. 6A and FIG. 6B, the first protrusion 222 may include a plurality of recesses 222 formed in the end surface 28 along the circumferential direction Y. In other words, a plurality of recesses 222 may be formed in the circumferential direction Y in the end surface 28 of the first protrusion 222. Since the plurality of recesses 222 are present, the adhesion area between the end member 203 and the exterior material 30 further increases, so that adhesion between the end member 203 and the exterior material 30 further improves.

The plurality of recesses 222 may or may not be arranged at equal intervals along the end surface 28 of the first protrusion 222.

The tilt direction of the recess 222 relative to the axial direction X is not particularly limited. As shown in (a) of FIG. 6C, the recess 222 may be formed so as to be tilted toward the element body 10 side relative to the axial direction X. As shown in (b) of FIG. 6C, the recess 222 may be formed so as to be tilted toward a side opposite to the element body 10 relative to the axial direction X. In any case, the part 30a of the exterior material 30 placed into the recess 222 can serve as a hook portion to the end member 203.

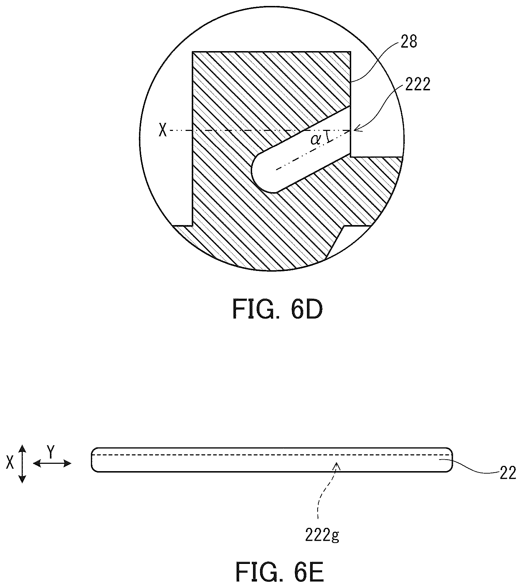

FIG. 6D is a partial sectional view illustrating a tilt angle α of the recess 222 relative to the axial direction X. The tilt angle α of the recess 222 relative to the axial direction X may be in a range of -60° < α < 60°. The tilt angle α may be in a range of -45° < α < 45°.

A height 222h of the recess 222 in the end member 203 is not particularly limited. As shown in FIG. 6C, the height 222h of the recess 222 refers to the width of the recess 222 in the end surface 28 when the end member 203 is seen in a sectional view. The height 222h of the recess 222 can be set as appropriate in accordance with the height 22h of the first protrusion 22, the length of the outer circumference of the first protrusion 22, and the like.

A depth 222d of the recess 222 in the end member 203 is not particularly limited. As shown in FIG. 6C, the depth 222d of the recess 222 is a straight distance from the end surface 28 to the deepest point of the recess 222 when the end member 203 is seen in a sectional view. The depth 222d of the recess 222 can be set as appropriate in accordance with the height 22h of the first protrusion 22, the length of the outer circumference of the first protrusion 22, and the like.

The recess 222 is a concept including a groove 222g extending continuously in the circumferential direction Y. FIG. 6E is a schematic side view showing another example of the first protrusion 22 of the end member 203. In FIG. 6E, parts other than the first protrusion 22 are not shown. As shown in FIG. 6E, the recess 222 may be the groove 222g extending continuously in the circumferential direction Y.

The descriptions for the above embodiments may be applied to each other as long as there is no technical contradiction. The embodiments may be combined with each other as long as there is no technical contradiction. For example, the separation membrane element 100 may be configured so as to satisfy all the above requirements (1) to (3).

### [Manufacturing Method for Spiral Membrane Element]

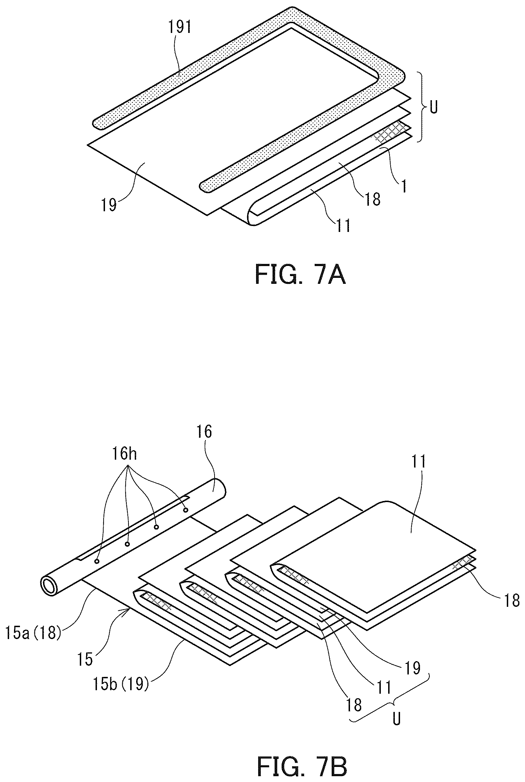

Next, with reference to FIG. 7A to 7C, an example of a manufacturing method for the separation membrane element 100 will be described using the end member 201 satisfying the requirement (1) as an example. First, as shown in FIG. 7A, the separation membrane 11 is folded in half so that the separation functional layer 1 of the separation membrane 11 is located on the inner side. The feed-side flow path material 18 is placed between the half folded parts of the separation membrane 11, and the permeation-side flow path material 19 is placed on the separation membrane 11. Next, an adhesive 191 is applied on three sides of an outer periphery of the permeation-side flow path material 19. Thus, a separation membrane unit U is obtained. The adhesive 191 has not been cured at this time.

Next, as shown in FIG. 7B, the central tube 16, a flow path material 15, and a plurality of separation membrane units U are prepared. The flow path material 15 has a first part 15a directly wound around the central tube 16, and a second part 15b laminated together with the separation membrane units U. The first part 15a of the flow path material 15 corresponds to the feed-side flow path material 18, and the second part 15b corresponds to the permeation-side flow path material 19. The material, the thickness, and the like of the first part 15a may be the same as or different from those of the second part 15b. The plurality of separation membrane units U are arranged in a step shape on the second part 15b of the flow path material 15. The number of the plurality of separation membrane units U is not particularly limited, and is, for example, 2 to 30. The separation membrane unit U located at the topmost position may not have the permeation-side flow path material 19, for example.

Next, the first part 15a of the flow path material 15 is wound around the central tube 16. The number of winding turns of the first part 15a is not particularly limited, and is, for example, 1 to 15, and is preferably 2 to 10.

Next, the plurality of separation membrane units U are wound around the central tube 16. At this time, the separation membrane unit U located at the topmost position is laminated together with the second part 15b of the flow path material 15. After the separation membrane units U are wound around the central tube 16, the adhesives 191 are cured so that adhesive layers 191a are formed, and bag-shaped membrane leaves 17 are formed. Thus, the element body 10 is obtained.

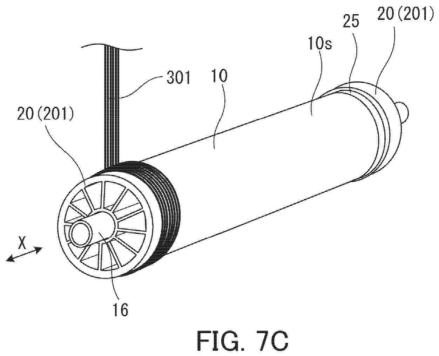

Next, as shown in FIG. 7C, the end members 201 are provided at both ends in the axial direction X of the element body 10. At this time, the inner circumferential surface 25si of the skirt portion 25 of each end member 201 contacts with the outer circumferential surface 10s of the element body 10. The end member 201 can be manufactured by cutting, injection molding, or the like.

Finally, while the element body 10 attached to the end member 201 is rotated around the axial direction X, a material 301 of the exterior material 30 is wound along the outer circumferential surface 10s of the element body 10. The material 301 of the exterior material 30 is glass fiber having a resin such as epoxy resin, for example. The resin has not been cured at this time. Therefore, the resin enters into the cut-in portion 221 of the end member 201. Thereafter, the resin is cured through a curing process, whereby the exterior material 30 is formed.

In the above manufacturing method, the resin included in the material 301 of the exterior material 30 is placed into at least a part of the cut-in portion 221. In other words, the part 30a of the exterior material 30 is formed by only resin. Thus, adhesion between the end member 201 and the exterior material 30 is improved. The separation membrane element 100 including the end member 201 is suitable for improving adhesion between the end member 201 and the exterior material 30. With the separation membrane element 100 including the end member 201, it is possible to suppress occurrence of a crack between the end member 201 and the exterior material 30 when the separation membrane element 100 is detached from the pressure-proof container.

### <Embodiment of End Member for Spiral Membrane Element>

As described above, the end member 20 (201, 202, 203) is used by being provided at one or both ends in the axial direction X of the separation membrane element 100. The end member 20 includes the body portion 21 of which the cross-section perpendicular to the axial direction X has a circular outline, and the annular skirt portion 25. The body portion 21 has the first protrusion 22 formed in the circumferential direction Y. The skirt portion 25 extends toward the element body 10 side from the first protrusion 22. In usage, the skirt portion 25 is placed at a position between the element body 10 and the exterior material 30.

The end member 20 satisfies at least one selected from the group consisting of the following requirements (i) to (iii):
(i) the first protrusion 22 has the cut-in portion 221 formed in the edge portion 27 thereof on the skirt portion 25 side;
(ii) the skirt portion 25 has at least one of the hole 251 and the through hole 252 formed in the outer circumferential surface 25so thereof; and
(iii) the first protrusion 22 has the recess 222 formed in a direction tilted relative to the axial direction X in the end surface 28 thereof on the skirt portion 25 side.

The end member 20 is suitable for improving adhesion between the end member 20 and the exterior material 30. By using the end member 20, it is possible to suppress occurrence of a crack between the end member 20 and the exterior material 30 when the separation membrane element 100 is detached from the pressure-proof container. Examples

Hereinafter, the present invention will be described in more detail, using Examples and Reference Examples, but the present invention is not limited thereto.

Regarding Examples 1 and 2 and Reference Examples 1 and 2 shown in Table 1, evaluation for adhesion between a material 1 used for the end member and a material 2 used for the exterior material was performed.

**[Table 1]**

| | Material 1 | Material 2 | Tensile shearing strength (N/mm²) |
|---|---|---|---|
| Reference Example 1 | ABS resin | Epoxy resin 1 | 2.7 |
| Reference Example 2 | ABS resin | Epoxy resin 2 | 5.7 |
| Example 1 | Polyamide resin (MC801) | Epoxy resin 1 | 1.2 |
| Example 2 | Polyamide resin (MC801) | Epoxy resin 2 | 2.7 |

| | | | |
|---|---|---|---|
| · Epoxy resin 1: a711-A, B · Epoxy resin 2: EPIKOTE 828 + Curing agent ANCAMIDE 350A | | | |

### [Evaluation of adhesion]

The material 1 was cut in width 1 cm × length 10 cm, to prepare a material piece 1. Two same material pieces 1 were prepared. After the epoxy resin of the material 2 was interposed between the two material pieces 1, a curing process was performed so that these materials were adhered. The adhesion area between the material piece 1 and the epoxy resin of the material 2 was 10 × 10 mm². Thereafter, using a tensile testing machine (Autograph AGS-X manufactured by Shimadzu Corporation), a tensile test was conducted with a condition at a tensile speed of 20 mm/min, an inter-chuck distance of 50 mm, and room temperature. One material piece 1 was pulled in the length direction, and stress when the epoxy resin of the material 2 was broken and the material pieces 1 were separated from each other was obtained as a tensile shearing strength (N/mm²). The result thereof is shown in Table 1.

The end member used for separation of gas such as acidic gas preferably contains a polyamide resin, a phenolic resin, a fluorine resin, or austenitic stainless steel, as a main component. This is because the above materials have high resistance to heavy hydrocarbons such as benzene, toluene, ethylbenzene, xylene (these are BTEX components), and unsaturated hydrocarbons. As is found from comparison between Example 1 and Example 2 in which the polyamide resin was used as the material 1, the tensile shearing strength in Example 2 in which the epoxy resin 2 was used as the material 2 was as excellent as that in Reference Example 1, and exhibited a higher value than that in Example 1.

### INDUSTRIAL APPLICABILITY

The spiral membrane element of the present embodiment is suitable for separating acidic gas from mixed gas containing the acidic gas. In particular, the spiral membrane element of the present embodiment is suitable for separating carbon dioxide from off-gas in a chemical plant or thermal power generation.

## Claims

1. A spiral membrane element comprising:
an element body including a central tube, and a membrane leaf having a separation membrane and wound around the central tube;
an end member provided at one or both ends in an axial direction of the element body; and
an exterior material covering at least an outer circumferential surface of the element body, wherein
the end member includes a body portion of which a cross-section perpendicular to the axial direction has a circular outline, and an annular skirt portion,
the body portion has a first protrusion formed in a circumferential direction,
the skirt portion extends toward the element body side from the first protrusion and is located between the element body and the exterior material, and
the end member satisfies at least one selected from the group consisting of the following requirements (1) to (3):
(1) the first protrusion has a cut-in portion formed in an edge portion thereof on the skirt portion side, and a part of the exterior material is placed into at least a part of the cut-in portion;
(2) the skirt portion has at least one of a hole and a through hole formed in an outer circumferential surface thereof, and a part of the exterior material is placed into at least a part of at least one of the hole and the through hole; and
(3) the first protrusion has a recess formed in a direction tilted relative to the axial direction in an end surface thereof on the skirt portion side, and a part of the exterior material is placed into at least a part of the recess.

2. The spiral membrane element according to claim 1, wherein
in the requirement (1), the first protrusion includes a plurality of the cut-in portions formed in the edge portion along the circumferential direction.

3. The spiral membrane element according to claim 1, wherein
in the requirement (1), the cut-in portion is formed so as to open in the axial direction and a radial direction in the edge portion.

4. The spiral membrane element according to claim 1, wherein
in the requirement (1), when the end member is seen in a side view, the cut-in portion has one shape selected from a V shape, a rectangular shape, a trapezoidal shape, a semicircular shape, an M shape, and a combination thereof.

5. The spiral membrane element according to claim 1, wherein
in the requirement (1), the cut-in portion has a recess-projection on an inner surface thereof.

6. The spiral membrane element according to claim 1, wherein
in the requirement (2), the skirt portion includes at least either a plurality of the holes or a plurality of the through holes formed in the outer circumferential surface along the circumferential direction.

7. The spiral membrane element according to claim 1, wherein
in the requirement (2), the hole includes a groove extending continuously in the circumferential direction.

8. The spiral membrane element according to claim 1, wherein
in the requirement (3), the first protrusion includes a plurality of the recesses formed in the end surface along the circumferential direction.

9. The spiral membrane element according to claim 1, wherein
in the requirement (3), the recess is formed so as to be tilted toward the element body side relative to the axial direction.

10. The spiral membrane element according to claim 1, wherein
in the requirement (3), the recess includes a groove extending continuously in the circumferential direction.

11. The spiral membrane element according to claim 1, wherein
the end member contains a polyamide resin as a main component.

12. The spiral membrane element according to claim 1, wherein
the exterior material includes glass fiber and a resin, and
the part of the exterior material is formed by only the resin.

13. The spiral membrane element according to claim 1, wherein
the body portion of the end member further has a second protrusion, and a seal groove which is located between the first protrusion and the second protrusion and at which a seal member is to be provided, the second protrusion and the seal groove each being formed in the circumferential direction.

14. The spiral membrane element according to claim 1, wherein
a feed fluid to be processed through the spiral membrane element is gas.

15. An end member for a spiral membrane element, to be used by being provided at one or both ends in an axial direction of the spiral membrane element, wherein
the spiral membrane element includes
an element body including a central tube, and a membrane leaf having a separation membrane and wound around the central tube, and
an exterior material covering at least an outer circumferential surface of the element body,
the end member includes a body portion of which a cross-section perpendicular to the axial direction has a circular outline, and an annular skirt portion,
the body portion has a first protrusion formed in a circumferential direction,
the skirt portion extends toward the element body side from the first protrusion and, in usage, is located between the element body and the exterior material, and
the end member satisfies at least one selected from the group consisting of the following requirements (i) to (iii):
(i) the first protrusion has a cut-in portion formed in an edge portion thereof on the skirt portion side;
(ii) the skirt portion has at least one of a hole and a through hole formed in an outer circumferential surface thereof; and
(iii) the first protrusion has a recess formed in a direction tilted relative to the axial direction in an end surface thereof on the skirt portion side.
